# EUROPÄISCHE PATENTSCHRIFT

(11) **EP 1 106 446 B1**
(45) Veröffentlichungstag und Bekanntmachung des Hinweises auf die Patenterteilung: **16.02.2005**
(21) Anmeldenummer: 99124616.6
(22) Anmeldetag: 10.12.1999
(51) Int. Cl.: B60R 21/20

(54) **In ein Innenverkleidungsteil für Fahrzeuge integriertes Airbag-System**
Interior garnish member for motor vehicles with integrated airbag device
Coussin de sécurité intégré dans une garniture de l'habitacle d'un véhicule automobile

(43) Veröffentlichungstag der Anmeldung: 13.06.2001
(73) Patentinhaber: ACTS-Advanced Car Technology Systems GmbH & Co.KG, 63877 Sailauf (DE)
(72) Erfinder: Arieth, Matthias E.J., 63801 Kleinostheim (DE); Martin, Alex, 63739 Aschaffenburg (DE); Schmidt, Werner, 63755 Alzenau-Hörstein (DE); Kerkhoff, Dieter, 63773 Goldbach (DE); Rubart, Dirk, 22926 Ahrensburg (DE); Speck, Uwe, 63743 Aschaffenburg-Schweinheim (DE)
(74) Vertreter: Pfiz, Thomas, Dr.

(56) Entgegenhaltungen:
- EP-A- 0 582 334
- DE-U- 29 609 801
- DE-U- 29 820 348
- US-A- 3 632 132
- US-A- 3 799 573

## Beschreibung

Die Erfindung betrifft ein in ein Innenverkleidungsteil für Fahrzeuge, insbesondere eine Instrumententafel, integriertes Airbag-System nach dem Oberbegriff des Patentanspruchs 1.

Aus der gattungsgemäßen US-A-3 799 573 ist ein derartiges Airbag-System bekannt, bei welchem in einem flexiblen Zwischenteil hinter einer Außenhaut ein Aufnahmeraum für den Airbag freigehalten ist, welcher auf einer expandierbaren Gaszuführung abgestützt ist, die über einen externen Druckbehälter mit Druckgas beaufschlagbar ist. In dieser Anordnung ist zwar in Entfaltungsrichtung keine harte Klappe vorgesehen, die durch den sich aufblasenden Airbag abgesprengt werden müsste. Nachteilig ist jedoch, dass das Airbag-Faltpaket nicht lagesicher gehalten wird, und dass eine definierte rasche Gaseinleitung nicht gewährleistet ist.

Aufgabe der Erfindung ist es, ein Airbag-System derart an bzw. in einem harten Innenverkleidungsteil unterzubringen, dass im Auslösefall des Airbags ebenfalls keine harten Teile des Innenverkleidungsteils in den Fahrgastraum gelangen und somit das Verletzungsrisiko reduziert ist, wobei jedoch keine speziellen und von ihrer Funktion auf die Funktion des Airbags abzustimmende Bauteile notwendig sein sollen.

Gelöst wird die gestellte Aufgabe erfindungsgemäß dadurch, dass die Aufnahme mit zumindest einer als Faltungen des Airbags aufnehmende Nut oder Rinne ausgebildeten Vertiefung versehen ist. Dadurch kann der Airbag in der gewünschten Weise gefaltet in die Ausformung eingelegt werden. Mit der Erfindung wird grundsätzlich davon Abstand genommen, den Airbag hinter dem Träger und gemeinsam mit dem Gasgenerator, als Airbagmodul, unterzubringen. Damit wird auch auf eine formstabile harte Abdeckklappe verzichtet, was die Verletzungsgefahr für die Insassen im Fahrzeug verringert. Die mit der Zwischenschicht versehene Außenhaut bildet durch die vorgesehene Aufreißnaht zumindest einen klappenartig aufreißbaren Bereich, der im Auslösefall leichter und ohne einen großen Druckaufbau unter der Haut zu erfordern aufgeht. Durch die somit verringerte Aufreißkraft kann die gesamte Schutzvorrichtung von ihrer Funktion her weniger aggressiv ausgelegt werden als dies bei den bekannten Anordnungen der Fall ist.

Gemäß einer bevorzugten Ausführungsform der Erfindung ist die Aufnahme für den gefalteten Airbag eine wannenartige Ausformung im Träger. Der Airbag wird daher auf besonders einfache Weise in ein Teil integriert, welches bereits vorhanden ist.

Insbesondere kann die Ausformung oval, annähemd kreisförmig oder recheckförmig oder dergleichen gestaltet sein, wobei die Vertiefungen als Faltungen des Airbags aufnehmende Nuten, Rinnen oder dergleichen ausgebildet werden, die beispielsweise zumindest zum Teil am Randbereich des Bodens der Ausformung verlaufen. Es gibt daher unterschiedliche Möglichkeiten und Varianten, die Ausgestaltung der Ausformung an die erwünschten Faltungsarten des Airbags anzupassen.

Um sicherzustellen, dass der Airbag von außen nicht sichtbar wird, ist es von Vorteil, wenn er derart in der Ausformung positioniert wird, dass zumindest seine Oberseite von Unebenheiten und Faltungen frei gehalten wird.

Der in der Ausformung positionierte Airbag wird außenseitig mit einer Folie abgedeckt. Damit ist gewährleistet, dass die zwischen dem Trägers und der Außenhaut eingebrachte Schaumstoffschicht sich mit dem Airbag nicht verbindet.

Die Verbindung des Airbags zum Gasgenerator wird dadurch einfach durchgeführt, dass am Boden der Ausformung zumindest eine Öffnung für eine Gasführung, die zum Gasgenerator führt, vorgesehen ist.

Dabei kann der Airbag auch über ein System von Verteilungsleitungen oder Gasführungen an mehreren Stellen mit Gas versorgt werden, um ein möglichst optimales und ungehindertes Aufblasen des Airbags zu gewährleisten.

Bei einer bevorzugten Variante der Erfindung wird die Aufreißnaht so angeordnet, dass sie zumindest zum Teil und zumindest im Wesentlichen der Außenkontur der Ausformung folgt. Dies stellt einen definierten klappenartig aufreißbaren Bereich bei der Auslösung des Airbags zur Verfügung.

Der Gasgenerator kann am Träger vormontiert und/oder an einem mit dem Fahrzeug verbundenen Teil, beispielsweise im Fall, dass das Innenverkleidungsteil die Instrumententafel ist, am Querträger befestigt werden.

Weitere Merkmale, Vorteile und Einzelheiten der Erfindung werden nun anhand der Zeichnung, die zwei Ausführungsbeispiele darstellt, näher beschrieben. Dabei zeigen
Fig. 1 schematisch einen Querschnitt durch eine Instrumententafel in jenem Bereich, wo eine einen Airbag umfassende Schutzvorrichtung für den Beifahrer untergebracht ist,
Fig. 2 den Querschnitt aus Fig. 1 unmittelbar nach einem Auslösen des Airbags und
Fig. 3 einen zu Fig. 1 analogen Querschnitt mit einer weiteren Ausführungsvariante der Erfindung.

In den Zeichnungsfiguren ist als Beispiel für ein erfindungsgemäß ausgeführtes Innenverkleidungsteil eine Instrumententafel dargestellt. Die Instrumententafel weist einen ihre Innenseite bildenden Träger 1, eine eine äußere Dekorschicht bildende Außenhaut 2 und eine dazwischen befindliche Schaumstoffschicht 3 auf. Außerhalb jenes Bereiches, wo ein Airbag 5 in noch zu beschreibender Weise untergebracht ist, sind der Träger 1 und die Außenhaut 2 über die Schaumstoffschicht 3 miteinander großflächig in Kontakt stehend verbunden.

Der Träger 1 ist ein formstabiles Kunststoffteil, das insbesondere im Spritzguss hergestellt ist. Die Außenhaut 2 besteht ebenfalls aus einem Kunststoff und wird beispielsweise nach einem Slushverfahren oder einem Sprühverfahren hergestellt. Die Außenhaut 2 ist meist weicher ausgeführt als der Träger 1 und bildet die dem Fahrgastraum zugewandte Dekorschicht. Der Träger 1 ist mit einer relativ großflächigen wannenartigen Ausformung 4 versehen, die zur Aufnahme des gefalteten Airbags 5 vorgesehen ist. Die Ausformung 4 kann, in Draufsicht betrachtet, nahezu beliebig gestaltet sein, insbesondere oval oder annähernd kreis- oder rechteckförmig, was aber aus der Zeichnung nicht ersichtlich ist. Eine möglichst gleichmäßige Form, beispielsweise eine Rechteckform, gestattet eine einfache Anpassung des Verlaufes der Aufreißnaht in der Außenhaut 2 an die Ausformung 4.

Beim dargestellten Ausführungsbeispiel ist die Ausformung 4 ferner an den beiden dargestellten Randbereichen mit einer nutartigen Vertiefung 4a versehen, mit der zusätzlicher Raum zur Unterbringung des gefalteten Airbags 5, insbesondere zur Unterbringung desselben mit speziellen Faltungen, geschaffen wird. Der in die Ausformung 4 eingelegte Airbag 5 ist außenseitig mit einer dünnen Kunststofffolie 6, die über die Ränder der Ausformung 4 hinaus reicht, abgedeckt. Der Airbag 5 ist über eine hier als Leitung gezeichnete Gasführung 7 mit einem außerhalb des Trägers 1 angeordneten Gasgenerator 8 verbunden. Zu diesem Zweck ist im Träger 1 im Bereich der Ausformung 4 an geeigneter Stelle eine Öffnung 4b frei gelassen. An Stelle einer Öffnung 4b können mehrere Öffnungen für von der Gasführung 7 abzweigende zusätzliche Leitungen bzw. Gasführungen angeordnet werden, die dafür vorgesehen werden können, den Airbag 5 optimal mit Gas zu befüllen. Der Gasgenerator 8 ist insbesondere an jenem Querträger 9 befestigt, welcher die Verbindung der Instrumententafel zum Fahrzeug herstellt. Die Befestigung des Gasgenerators 8 am Querträger 9 erfolgt jedenfalls derart, dass der Querträger 9 in der Lage ist, die Reaktionskraft des Gasgenerators 8 im Auslösefall zu absorbieren.

Die Ausformung 4 kann an beliebigen Stellen mit in beliebiger Form ausgeführten Vertiefungen zur Aufnahme von Airbag-Faltungen versehen werden.

Zumindest in der Außenhaut 2 ist eine Aufreißnaht 10 vorgesehen, sodass im Falle eines Auslösens des Airbags 5 die Außenhaut 2 unter Bildung zumindest eines klappenartig wegschwenkbaren Teils an definierten Stellen aufreißt. Die Aufreißnaht 10 kann dabei beispielsweise U-förmig verlaufen, was bei der dargestellten Ausführungsform der Fall ist, wo jedoch nur der verbindende Abschnitt des U's im Schnitt gezeigt ist, welcher etwa entlang des unteren Randbereiches der Ausformung 4 verläuft. Die seitlichen Schenkeln, die quasi entlang der Seitenbereiche der Ausformung 4 verlaufen, sind nicht ersichtlich. Die Aufreißnaht 10 kann auch andere Formen annehmen, etwa rund, beispielsweise oval, oder als simple Linie oder in der Form eines H ausgebildet sein, wodurch zwei klappenartig aufreißbare Teile gebildet werden. Im Bereich der Aufreißnaht 10 kann nun die Außenhaut 2 entweder mit einer verringerten Dicke ausgeführt sein, perforiert sein oder komplett durchschnitten sein. Die Aufreißnaht 10 kann bereits bei der Herstellung der Außenhaut 2 durch einen Steg oder dergleichen in der Form mitgebildet werden oder nachträglich in der fertigen Außenhaut 2, beispielsweise durch Einschneiden mittels eines Messers oder Lasers, erstellt werden. Dabei kann die Aufreißnaht 10 auch von außen angebracht werden und in die Schaumstoffschicht 3 hinein reichen.

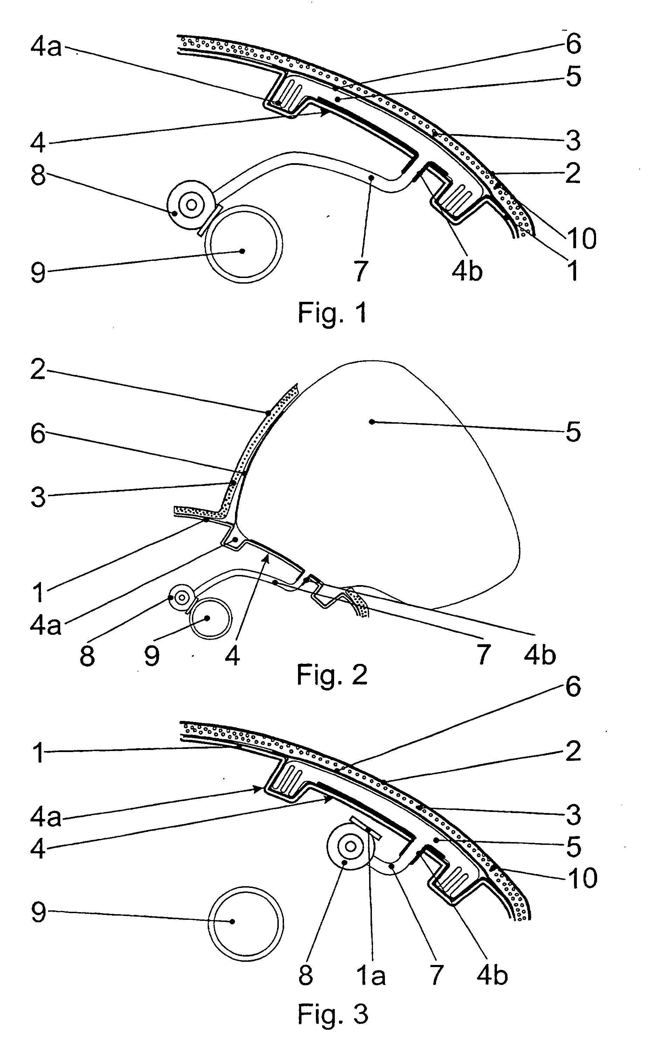

Im Fall einer Auslösung des Airbags 5 wird dieser durch das einströmende Gas explosionsartig gefüllt und drückt die Außenhaut 2 mitsamt Schaumstoffschicht 3 in einem klappenartigen Bereich auf, der durch den Verlauf der Aufreißnaht 10 bestimmt ist. Die Lage unmittelbar nach dem Durchtritt des Airbags 5 ist in Fig. 2 dargestellt, wo zu sehen ist, dass die Außenhaut 2, ohne dass ein gesondertes Scharnier zum Aufreißen erforderlich ist, klappenartig geöffnet ist. Der stabile Kunststoffträger 1 ist bei der erfindungsgemäßen Anordnung und Unterbringung des Airbags 5 an der Airbagauslösung nicht beteiligt und kann daher auch kein Verletzungsrisiko mehr darstellen. Jene Bestandteile - Außenhaut 2 mitsamt Schaumstoffschicht 3 - die vom Airbag wegdrückt bzw. geöffnet werden, sind leicht und vergleichsweise weich, sodass ein mögliches Verletzungsrisiko weitgehend herabgesetzt ist. Die Kraft, die zum Aufreißen der Airbagabdeckung erforderlich ist, ist wesentlich geringer als bei jenen Lösungen, wo der Träger ein Bestandteil der Abdeckung ist. Somit ist durch die erfindungsgemäße Anordnung und Unterbringung des Airbags 5 eine weitaus weniger aggressive Öffnung als dies bei den üblichen Anordnungen der Fall ist ermöglicht.

Die Herstellung eines Innenverkleidungsteil, hier einer Instrumententafel, mit einem erfindungsgemäßen Airbag-System ist denkbar einfach. Bei der in den Zeichnungsfiguren dargestellten Ausführungsvariante kann die Außenhaut, wenn sie aus Kunststoff besteht, wie bereits erwähnt nach einem Slushverfahren oder Sprühverfahren oder anderen Verfahren hergestellt werden. Der Träger 1 wird als Spritzgussteil oder nach einem anderen Verfahren gesondert mitsamt der Ausformung 4 hergestellt. In den fertigen Träger 1 wird der insbesondere bereits entsprechend vorgefaltete Airbag 5 in die Ausformung 4 gelegt. Die Art der Faltung des Airbags 5 erfolgt dabei bevorzugt derart, dass der Airbag 5 großflächig und insbesondere unter Vermeidung von Unebenheiten an seinem die Ausformung 4 von oben abdeckenden Bereich eingelegt wird. In den nutartigen Vertiefungen 4a können Faltungen besonders gut untergebracht werden. Anschließend werden die Ausformung 4 und mit ihr der Airbag 5 von außen durch die dünne Folie 6 abgedeckt, die am Rand der Ausformung 4 mit der Innenseite des Trägers 1 verbunden wird. Zu diesem Zweck kann die Folie 6 an ihren Randbereichen selbstklebend ausgeführt sein oder mit dem Träger 1 gesondert verklebt werden. Anschließend werden die Außenhaut 2 und der Träger 1 in ein Schaumwerkzeug eingelegt und der zwischen diesen Bauteilen verbleibende Raum wird mit Schaum gefüllt. Die fertige Instrumententafel wird dem Werkzeug entnommen und auf übliche Weise im Fahrzeug montiert, wobei auch die Verbindung des Airbags 5 mit dem Gasgenerator 8 hergestellt wird.

Die in Fig. 3 dargestellte Ausführungsform entspricht bis auf die Anordnung des Gasgenerators 8 jener gemäß Fig. 1. Der Gasgenerator 8 ist hier gemeinsam mit dem Airbag 5 an zumindest einem Teil 1a des Trägers 1, insbesondere im Bereich der Unterseite der Ausformung 4, vormontiert. Das oder die Teil(e) 1a werden bei der Herstellung des Trägers 1 mitgeformt. Beim Einbau der Instrumententafel in das Fahrzeug kann nun der Gasgenerator 8 über entsprechende Befestigungsteile zusätzlich mit dem Querträger 9 verbunden werden bzw. an diesem befestigt werden. In diesem Fall bilden jedenfalls der Airbag 5, der Gasgenerator 8 und etwaige Zu- bzw. Verteilungsleitungen 7 zu definierten Bereichen des Airbags 5 eine vormontierte Einheit.

Das Innenverkleidungsteil kann auch eine Türverkleidung oder der Dachhimmel eines Fahrzeuges sein. Es kann bzw. können an Stelle einer Schaumstoffschicht eine oder mehrere Vliesschichten oder Schichten aus vergleichbaren Materialien vorgesehen werden. Die Außenhaut kann ferner auch aus Leder bestehen. Die wannenartige Ausformung im Träger kann zumindest teilweise auch ohne Vertiefungen ausgeführt sein oder an beliebigen Stellen Aufnahmebereiche für Airbagfaltungen aufweisen.

## Patentansprüche

1. Airbag-System zur Integration in ein Innenverkleidungsteil für Fahrzeuge, insbesondere eine Instrumententafel, mit einem mittels eines Gasgenerators aufblasbaren Airbag (5), wobei das Innenverkleidungsteil zumindest aus einem formstabilen Träger (1), einer eine Dekorschicht bildenden Außenhaut (2) und einer dazwischen angeordneten Zwischenschicht (3) aus Schaumstoff, Vlies oder dergleichen besteht, wobei zumindest die Außenhaut (2) mit einer Aufreißnaht (10) für den Airbag (5) versehen ist und zwischen Träger (1) und Zwischenschicht (3) im Träger (1) eine Aufnahme (4) für den Airbag (5) integriert ist, wo dieser zumindest weitgehend passgenau einlegbar ist, und wobei der Gasgenerator (8) außerhalb des Trägers (1) angeordnet ist, **dadurch gekennzeichnet, dass** die Aufnahme (4) mit zumindest einer als Faltungen des Airbags aufnehmende Nut oder Rinne ausgebildeten Vertiefung (4a) versehen ist.

2. Airbag-System nach Anspruch 1, **dadurch gekennzeichnet, dass** die Aufnahme für den gefalteten Airbag (5) eine im Träger (1) geformte wannenartige Ausformung (4) ist.

3. Airbag-System nach Anspruch 1 oder 2, **dadurch gekennzeichnet, dass** die Aufnahme (4) oval, annähernd kreisförmig oder recheckförmig oder dergleichen gestaltet ist.

4. Airbag-System nach einem der Ansprüche 1 bis 3, **dadurch gekennzeichnet, dass** die Vertiefungen (4a) beispielsweise zumindest zum Teil am Randbereich eines Bodens der Aufnahme (4) zumindest zum Teil umlaufen.

5. Airbag-System nach einem der Ansprüche 1 bis 4, **dadurch gekennzeichnet, dass** der in der Aufnahme (4) positionierte und gefaltete Airbag (5) zumindest im Bereich seiner Oberseite von Unebenheiten und Faltungen frei gehalten ist.

6. Airbag-System nach einem der Ansprüche 1 bis 5, **dadurch gekennzeichnet, dass** der in der Ausformung (4) positionierte Airbag (5) außenseitig mit einer Folie (6) abgedeckt ist.

7. Airbag-System nach einem der Ansprüche 1 bis 6, **dadurch gekennzeichnet, dass** am Boden der Ausformung (4) zumindest eine Öffnung (4b) für eine Gasführung (7) zum Gasgenerator (8) vorgesehen ist.

8. Airbag-System nach einem der Ansprüche 1 bis 7, **dadurch gekennzeichnet, dass** der Airbag (5) über ein System von Gasführungen bzw.Verteilungsleitungen an mehreren Stellen mit Gas versorgbar ist.

9. Airbag-System nach einem der Ansprüche 1 bis 8, **dadurch gekennzeichnet, dass** die Aufreißnaht (10) zumindest zum Teil und zumindest im Wesentlichen der Außenkontur der Ausformung (4) folgend angeordnet. Ist.

10. Airbag-System nach einem der Ansprüche 1 bis 9, **dadurch gekennzeichnet, dass** der Gasgenerator (8) am Träger (1) vormontiert ist und/oder an einem mit dem Fahrzeug verbundenen Teil, beispielsweise dem Querträger (9), befestigt ist.

## Claims

1. Airbag system for integration into an internal trim part for vehicles, in particular a fascia, with an airbag (5) that can be inflated by means of a gas-generator, wherein the internal trim part consists at least of a dimensionally stable bearing member (1), an outer skin (2) forming a decorative layer, and an intermediate layer (3) of foam material, nonwoven material or the like disposed between them, wherein at least the outer skin (2) is provided with a tear-open seam (10) for the airbag (5) and a receptacle (4) for said airbag (5) is integrated into the bearing member (1) between said bearing member (1) and the intermediate layer (3), in which receptacle said airbag can be laid in an at least largely accurately fitting manner, and wherein the gas-generator (8) is arranged outside the bearing member (1), **characterised in that** the receptacle (4) is provided with at least one recess (4a) which is constructed as a groove or channel which receives folds of the airbag.

2. Airbag system according to claim 1, **characterised in that** the receptacle for the folded airbag (5) is a trough-like contoured portion (4) moulded in the bearing member (1).

3. Airbag system according to claim 1 or 2, **characterised in that** the receptacle (4) is oval, approximately circular or rectangular or the like in shape.

4. Airbag system according to one of claims 1 to 3, **characterised in that** the recesses (4a) at least partly run round, for example, at least partly at the edge region of a bottom of the receptacle (4).

5. Airbag system according to one of claims 1 to 4, **characterised in that** the airbag (5) which has been positioned and folded in the receptacle (4) is kept free from unevennesses and folds, at least in the region of its upper side.

6. Airbag system according to one of claims 1 to 5, **characterised in that** the airbag (5) which has been positioned in the contoured portion (4) is covered on the outside with a film (6).

7. Airbag system according to one of claims 1 to 6, **characterised in that** at least one opening (4b) for a gas feed (7) to the gas-generator (8) is provided at the bottom of the contoured portion (4).

8. Airbag system according to one of claims 1 to 7, **characterised in that** the airbag (5) can be supplied with gas at a number of points via a system of gas feeds or distributing lines.

9. Airbag system according to one of claims 1 to 8, **characterised in that** the tear-open seam (10) is arranged in a manner following, at least partly and at least substantially, the outer contour of the contoured portion (4).

10. Airbag system according to one of claims 1 to 9, **characterised in that** the gas-generator (8) is pre-mounted on the bearing member (1) and/or is fastened to a part, for example the bearing cross-member (9), which is connected to the vehicle.

## Revendications

1. Système de coussin de sécurité à intégrer dans un élément de garniture intérieure de véhicules, notamment dans une planche de bord, avec un coussin de sécurité (5) gonflable au moyen d'un générateur de gaz, l'élément de garniture intérieure étant constitué au moins d'un support indéformable (1), d'une enveloppe extérieure (2) formant une couche décorative et d'une couche intermédiaire (3) en mousse, non-tissé ou analogue disposée entre les deux, au moins l'enveloppe extérieure (2) étant pourvue d'un joint déchirable (10) pour le coussin de sécurité (5) et un logement (4) pour le coussin de sécurité (5) étant intégré dans le support (1) entre le support (1) et la couche intermédiaire (3), logement dans lequel le coussin de sécurité (5) peut être installé au moins essentiellement en ajustement serré, et le générateur de gaz (8) étant disposé à l'extérieur du support (1), **caractérisé en ce que** le logement (4) est pourvu d'au moins un renfoncement (4a) réalisé sous forme de rainure ou de rigole recevant des plis du coussin de sécurité.

2. Système de coussin de sécurité selon la revendication 1, **caractérisé en ce que** le logement pour le coussin de sécurité plié (5) est un évidement du genre cuvette (4) formé dans le support (1).

3. Système de coussin de sécurité selon la revendication 1 ou 2, **caractérisé en ce que** le logement (4) est réalisé de forme ovale, approximativement circulaire, rectangulaire ou analogue.

4. Système de coussin de sécurité selon l'une des revendications 1 à 3, **caractérisé en ce que** les renfoncements (4a) font au moins pour partie le tour de, par exemple, au moins pour partie la région de bord d'un fond du logement (4).

5. Système de coussin de sécurité selon l'une des revendications 1 à 4, **caractérisé en ce que** le coussin de sécurité (5) plié et positionné dans le logement (4) est maintenu libre d'irrégularités et de plis au moins dans la région de sa face supérieure.

6. Système de coussin de sécurité selon l'une des revendications 1 à 5, **caractérisé en ce que** le coussin de sécurité (5) positionné dans l'évidement (4) est recouvert extérieurement d'un film (6).

7. Système de coussin de sécurité selon l'une des revendications 1 à 6, **caractérisé en ce qu'**au moins une ouverture (4b) pour une conduite de gaz (7) menant au générateur de gaz (8) est prévue sur le fond de l'évidement (4).

8. Système de coussin de sécurité selon l'une des revendications 1 à 7, **caractérisé en ce que** le coussin de sécurité (5) peut être alimenté en gaz en plusieurs endroits par l'intermédiaire d'un système de conduites de gaz ou encore de conduites de distribution.

9. Système de coussin de sécurité selon l'une des revendications 1 à 8, **caractérisé en ce que** le joint déchirable (10) est disposé en suivant au moins pour partie et au moins sensiblement le contour extérieur de l'évidement (4).

10. Système de coussin de sécurité selon l'une des revendications 1 à 9, **caractérisé en ce que** le générateur de gaz (8) est pré-assemblé sur le support (1) et/ou fixé sur un élément assemblé au véhicule, par exemple sur la traverse (9).
